# EUROPEAN PATENT APPLICATION

(11) **EP 3 854 858 A1**
(43) Date of publication of application: **28.07.2021**
(21) Application number: 19861685.6
(22) Date of filing: 17.09.2019
(51) Int. Cl.: C09D 201/00, C09D 5/02, C09D 5/44, C09D 7/61, C09D 179/08

(54) **ELECTRODEPOSITION COATING MATERIAL AND INSULATING COATING FILM**

(30) Priority: 20.09.2018 JP 2018176012
(71) Applicant: Sumitomo Seika Chemicals Co., Ltd., Kako-gun, Hyogo 675-0145 (JP)
(72) Inventor: MORIYAMA, Hirotake, Kako-gun Hyogo 675-0145 (JP)
(74) Representative: Mewburn Ellis LLP
(86) International application number: PCT/JP2019/036319
(87) International publication number: WO 2020/059689

(57) **Abstract**

There is provided an electrodeposition paint that forms a coating having both high insulating properties and high heat resistance. An electrodeposition paint comprising a heat-resistant resin precursor, a water-insoluble inorganic compound, a basic compound, an organic solvent, and water, wherein the water-insoluble inorganic compound content is 1 to 30% by mass relative to a total of 100% by mass of the heat-resistant resin precursor and the water-insoluble inorganic compound.

## Description

### Technical Field

The present invention relates to an electrodeposition paint and an insulating coating.

### Background Art

In the electrical and electronic fields, metal parts used as electrical conductors typically require coatings of insulating films. One useful technique for coating the surface of an electrical conductor with an insulating film is an electrodeposition coating method. In the electrodeposition coating method, an electrodeposition paint is used to form a resin coating film on the surface of an electrical conductor as a workpiece to be coated by the application of a current. The electrodeposition coating method allows uniform coating even for complicated shapes, and is therefore widely used in the electrical and electronic fields and the like.

Materials in the electrical and electronic fields and the like have been recently required to be highly heat-resistant, in addition to being insulating, from the viewpoint of assuring the product safety and reliability.

### Citation List

### Patent Literature

Patent Literature 1: JP 2003-268235 A
Patent Literature 2: JP 2009-256489 A
Patent Literature 3: JP H09-124978 A
Patent Literature 4: JP 2012-138289 A

### Summary of Invention

### Technical Problem

Resins generally used for electrodeposition coating are, for example, hydrophilic polymers, such as epoxy resins and acrylic resins. However, these resins used for electrodeposition coating have the problem of low heat resistance.

Compositions obtained by mixing various resins have been proposed which impart improved heat resistance to the coatings to be formed by electrodeposition coating (see, for example, Patent Literatures 1 to 4).

However, for example, the resin composition disclosed in Patent Literature 1, in which an epoxy resin, an acrylic resin, or the like is used in combination, is not considered to impart sufficient heat resistance to the coating film to be formed. For example, in Patent Literature 2, a cationic electrodeposition resin obtained by bonding a cationic hydratable functional group to a base resin, such as a polyimide resin, polyamide-imide resin, or a polyamide resin, via a urea linkage or urethane linkage, is attempted to be used as a paint. However, because these paints contain urea linkages or urethane linkages, they are insufficient in terms of heat resistance.

For example, Patent Literature 3 proposes an anionic electrodeposition paint composition containing a neutralized salt of polyamic acid obtained by neutralizing a polyamic acid with an alkali, such as an amine, for the purpose of improving the heat resistance, wherein the neutralized salt is electrodeposited on the anode side. Patent Literature 4 proposes an anionic electrodeposition paint composition and the like containing a polyimide resin ring-closed by block copolymerization, wherein the polyimide resin is deposited on the anode. However, these resin compositions for electrodeposition are also insufficient in terms of both high insulating properties and high heat resistance.

Under such circumstances, it is a main object of the present invention to provide an electrodeposition paint that forms a coating having both high insulating properties and high heat resistance

### Solution to Problem

The present inventors have conducted extensive research to solve the above-described problem. As a result, they have found that when a heat-resistant resin precursor and the like are incorporated into an electrodeposition paint, and the content of a water-insoluble inorganic compound in the electrodeposition paint is set in a predetermined range, a coating having both high insulating properties and high heat resistance is formed by electrodeposition and curing of the electrodeposition paint.

In summary, the present invention provides aspects of the invention comprising the following features:
Item 1. An electrodeposition paint comprising a heat-resistant resin precursor, a water-insoluble inorganic compound, a basic compound, an organic solvent, and water, wherein
   the water-insoluble inorganic compound content is 1 to 30% by mass relative to a total of 100% by mass of the heat-resistant resin precursor and the water-insoluble inorganic compound.
Item 2. The electrodeposition paint according to item 1, wherein the heat-resistant resin precursor is at least one of a polyimide resin precursor and a polyamide-imide resin precursor.
Item 3. The electrodeposition paint according to item 1 or 2, wherein the water-insoluble inorganic compound is at least one selected from the group consisting of a silica compound, a silica-alumina compound, an aluminum compound, a nitride, and a layered silicate mineral.
Item 4. The electrodeposition paint according to item 3, wherein the aluminum compound is at least one selected from the group consisting of alumina, an aluminum hydroxide, and a hydrated alumina.
Item 5. An insulating coating obtained by electrodeposition and curing of the electrodeposition paint according to any one of items 1 to 4.
Item 6. Use of a composition as an electrodeposition paint, the composition comprising a heat-resistant resin precursor, a water-insoluble inorganic compound, a basic compound, an organic solvent, and water, wherein
the water-insoluble inorganic compound content is 1 to 30% by mass relative to a total of 100% by mass of the heat-resistant resin precursor and the water-insoluble inorganic compound.

### Advantageous Effects of Invention

The present invention can provide an electrodeposition paint that forms a coating having both high insulating properties and high heat resistance. The present invention can also provide an insulating coating, which is an electrodeposited and cured product of the electrodeposition paint.

### Brief Description of Drawings

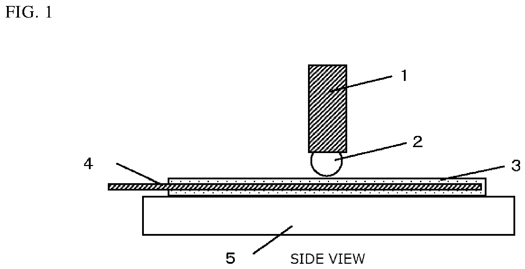

Fig. 1 is a schematic diagram for explaining the method of evaluating the insulating properties (partial discharge resistance test) in the examples.

### Description of Embodiments

An electrodeposition paint and an insulating coating of the present invention will be hereinafter described in detail. As used herein, values connected with "to" refer to the numerical range including the values before and after "to" as the lower and upper limits. When a plurality of lower limits and a plurality of upper limits are mentioned separately, any lower limit and any upper limit may be selected and connected with "to".

### 1. Electrodeposition paint

The electrodeposition paint of the present invention comprises a heat-resistant resin precursor, a water-insoluble inorganic compound, a basic compound, an organic solvent, and water, wherein the water-insoluble inorganic compound content is 1 to 30% by mass relative to a total of 100% by mass of the heat-resistant resin precursor and the water-insoluble inorganic compound. Because the electrodeposition paint of the present invention has these features, it forms a coating having both high insulating properties and high heat resistance when it is electrodeposited and then cured.

### (Heat-resistant resin precursor)

In the present invention, the heat-resistant resin precursor refers to a precursor of a heat-resistant resin, and more specifically a precursor that forms a heat-resistant resin when cured by a curing means, such as heating.

As used herein, the heat-resistant resin refers to a resin having a glass transition point (Tg) of 270°C or more, which is a resin having excellent heat resistance compared to general resins such as epoxy resins and acrylic resins, for example. Specific preferred examples of the heat-resistant resin include a polyimide resin, a polyamide-imide resin, a polybenzoxazole resin, a polybenzothiazole resin, and a polybenzimidazole resin. Particularly preferred are a polyimide resin and a polyamide-imide resin. The glass transition point of the heat-resistant resin is measured using a differential scanning calorimeter (DSC). The upper limit of the glass transition point (Tg) is, for example, 600°C. For resins whose glass transition points cannot be measured, those having a 5% weight loss temperature of 400°C or more are categorized as heat-resistant resins. The upper limit of the 5% weight loss temperature is, for example, 700°C.

Specific preferred examples of the heat-resistant resin precursor include a polyimide resin precursor, a polyamide-imide resin precursor, a polybenzoxazole resin precursor, a polybenzothiazole resin precursor, and a polybenzimidazole resin precursor. Among the above, a polyimide resin precursor and a polyamide-imide resin precursor are more preferred, because they allow a coating having both high insulating properties and high heat resistance to be formed satisfactorily, and impart excellent flexibility to the coating to be obtained. These heat-resistant resin precursors may be used alone or as a mixture of two or more.

Specific examples of each of the polyimide resin precursor and the polyamide-imide resin precursor include a polyamic acid, a polyamic acid ester, and a polyamic acid salt. Specific examples of the polybenzoxazole resin precursor include polyhydroxyamide. Specific examples of the polybenzothiazole resin precursor include polythiohydroxyamide. Specific examples of the polybenzimidazole resin precursor include a polymer having a polyaminoamide-imide ring, a polymer having an oxazole ring, and a polymer having another cyclic structure.

A polyamic acid, a polyamic acid ester, and a polyamic acid salt are particularly preferred as the heat-resistant resin precursor.

In the electrodeposition paint of the present invention, the heat-resistant resin precursor content may be any concentration as long as the content of the below-described water-insoluble inorganic compound is set in the predetermined range, and a coating is formed by electrodeposition. The heat-resistant resin precursor content is preferably 0.1 to 50% by mass, and more preferably 1 to 20% by mass. When the heat-resistant resin precursor content is 0.1% by mass or more, the thickness of the coating to be formed is not excessively small, relative to the current-application time and the voltage applied to the electrodeposition paint, leading to improved productivity. When the heat-resistant resin precursor content is 50% by mass or less, agglomeration of the heat-resistant resin precursor in the electrodeposition paint can be prevented. The upper limit is more preferably 10% by mass or less, from the viewpoint of the dispersibility of the heat-resistant resin precursor in the electrodeposition paint.

### (Water-insoluble inorganic compound)

In the present invention, "water-insoluble" of the water-insoluble inorganic compound means that the solubility at 20°C in 100 mL of water is less than 1.0 g.

In the electrodeposition paint of the present invention, the water-insoluble inorganic compound content is 1 to 30% by mass relative to a total of 100% by mass of the heat-resistant resin precursor and the water-insoluble inorganic compound. Because the electrodeposition paint of the present invention contains the heat-resistant resin precursor, an electrodeposition paint in which the components are uniformly dispersed is satisfactorily formed even when the water-insoluble inorganic compound content is set to a high concentration, compared to the case where a heat-resistant resin is used. Furthermore, the electrodeposition paint is satisfactorily electrodeposited and cured to form an insulating coating.

From the viewpoint of forming a coating having both high insulating properties and high heat resistance, in the electrodeposition paint of the present invention, the water-insoluble inorganic compound content is preferably 2 to 25% by mass, and more preferably 5 to 20% by mass, relative to a total of 100% by mass of the heat-resistant resin precursor and the water-insoluble inorganic compound.

Specific preferred examples of the water-insoluble inorganic compound include a silica compound, a silica-alumina compound, an aluminum compound, a calcium compound, a nitride, a layered silicate mineral, a layered double hydroxide, coal ash, zirconia, titania, yttria, and zinc oxide. These water-insoluble inorganic compounds may be used alone or as a mixture of two or more. Among the above, a silica compound, a silica-alumina compound, an aluminum compound, a nitride, and a layered silicate mineral are more preferred.

Examples of the silica compound include silica, wollastonite, and glass beads. Examples of the silica-alumina compound include zeolite and mullite. Examples of the aluminum compound include spinel, an aluminum hydroxide, aluminum oxide (alumina), a hydrated alumina, and aluminum borate. Examples of the hydrated alumina include gibbsite, bayerite, nordstrandite, boehmite, diaspore, and tohdite. Examples of the calcium compound include calcium carbonate and calcium oxide. Examples of the nitride include silicon nitride, boron nitride, and aluminum nitride. Examples of the layered silicate mineral include natural or synthetic mica, talc, kaolin, pyrophyllite, sericite, vermiculite, smectite, bentonite, stevensite, montmorillonite, beidellite, saponite, hectorite, and nontronite. Examples of the layered double hydroxide include hydrotalcite. Preferred among the above is an aluminum compound, more preferred are alumina, an aluminum hydroxide, and a hydrated alumina, and particularly preferred is boehmite, from the viewpoint of forming a coating having both high insulating properties and high heat resistance.

The insoluble inorganic compound preferably has an average particle diameter of 1 nm to 5 µm, and more preferably has an average particle diameter of 5 to 500 nm, from the viewpoint of the heat resistance, the insulating properties, and the mechanical strength of the insulating coating to be formed by electrodeposition and subsequent curing. The average particle diameter refers to the particle diameter at a cumulative value of 50% in the particle size distribution measured with a laser diffraction scattering-type particle size measurement apparatus (Microtrac).

The water-insoluble inorganic compound is preferably in the form of nanoparticles. The "nanoparticles" refers to nanosized particles, and specifically, particles with an average particle diameter of about 1 nm to 1 µm. When the water-insoluble inorganic compound is in the form of particles having a flat structure, the "nanoparticles" also includes particles whose average particle diameter in at least the width direction or thickness is about 1 nm to 1 µm.

The water-insoluble inorganic compound preferably has an aspect ratio (major axis/minor axis) of 2 or more, and more preferably has an aspect ratio of 5 to 100. When the water-insoluble inorganic compound has an aspect ratio of 2 or more, upon application onto a conductor, the water-insoluble inorganic compound can be aligned regularly in a direction opposed to erosion due to partial discharge, and can thereby increase the area of the conductor to be covered to further enhance the effect of partial discharge resistance.

As used herein, the "aspect ratio" refers to a ratio of the major axis to the minor axis (major axis/minor axis) of particles observed with a scanning electron microscope at 5000x magnification. That is, in the case of the water-insoluble inorganic compound in the form of plate-like particles, the aspect ratio is determined by dividing the average value of particle diameters by the average value of plate thicknesses; specifically, by dividing the average value of particle diameters by the average value of plate thicknesses for at least 100 plate-like particles of the water-insoluble inorganic compound. As used herein, the particle diameter of a plate-like particle corresponds to the diameter of a circle having the same area as that of a main surface of the plate-like particle. In the case of rod- or needle-like particles, the aspect ratio is determined by dividing the length of a needle (rod) by the diameter of the needle (rod).

When the water-insoluble inorganic compound is incorporated into the electrodeposition paint of the present invention, the water-insoluble inorganic compound may be in a powdered state, or may be in a sol state in which it is dispersed in a dispersion medium, such as water or an organic solvent. It is preferred to select the sol-state water-insoluble inorganic compound dispersed in a dispersion medium, because when the sol-state water-insoluble inorganic compound is used, an insulating coating in which the water-insoluble inorganic compound is highly dispersed is obtained after electrodeposition and curing, and partial discharge resistance in addition to heat resistance can be imparted.

When the insoluble inorganic compound is in a sol state, the dispersion medium is preferably a dispersion medium having high compatibility with the heat-resistant resin precursor, or a dispersion medium in which the dispersed particles can be stably present. Specifically, the dispersion medium is more preferably methanol, ethanol, N,N-dimethylformamide, N,N-dimethylacetamide, N-methyl-2-pyrrolidone, or the like.

The water-insoluble inorganic compound may be a surface-modified compound. The surface modification of the water-insoluble inorganic compound may be performed using a known method, such as an organic surface treatment with a surface-treating agent, such as a silane coupling agent or a titanate coupling agent, for example. A preferred surface modifier is a silane coupling agent.

### (Basic compound)

The basic compound may be any basic compound that can be used in the electrodeposition of an electrodeposition paint, and is preferably an amine compound, an alkali metal, or an alkaline earth metal. The basic compound is more preferably an amine compound, and still more preferably an imidazole compound or a tertiary amine compound. These basic compounds may be used alone or as a mixture of two or more.

Specific examples of the imidazole compound include 1,2-dimethylimidazole, 2-ethyl-4-methylimidazole, 4-ethyl-2-methylimidazole, and 1-methyl-4-ethylimidazole. Specific examples of the tertiary amine compound include triethylenediamine, trimethylamine, triethylamine, N,N,N',N"N"-pentamethyldiethylenetriamine, N,N,N',N'-tetramethylpropanediamine, 1,4-dimethylpiperazine, 1,4-diethylpiperazine, N,N-dimethylcyclohexylamine, ethylenediaminetetraacetic acid, N,N-dimethylaminoethanol, triethanolamine, N-dimethylbenzylamine, and N-methylmorpholine. Among the above, 1,2-dimethylimidazole, triethylenediamine, triethylamine, N,N-dimethylaminoethanol, and N-methylmorpholine are particularly preferred.

In the electrodeposition paint of the present invention, the basic compound content may be any concentration as long as the water-insoluble inorganic compound content is set in the predetermined range, and a coating is formed by electrodeposition. The basic compound content is preferably 0.01 to 10% by mass, and more preferably 0.1 to 5% by mass. When the basic compound content is 0.01% by mass or more, agglomeration and precipitation of the heat-resistant resin precursor in the electrodeposition paint can be prevented, whereas when the content is 10% by mass or less, more suitable film formability during electrodeposition coating can be achieved. The lower limit of the basic compound content is more preferably 0.3% by mass or more, while the upper limit is more preferably 3% by mass or less.

### (Organic solvent)

The organic solvent may be any organic solvent that can be used in the electrodeposition of an electrodeposition paint, and a known solvent conventionally used in an electrodeposition paint is used. Such organic solvents may be used alone or as a mixture of two or more.

Specific examples of the organic solvent include amide-based solvents, such as N,N-dimethylformamide, N,N-dimethylacetamide, and N-methyl-2-pyrrolidone; alcohol-based solvents, such as methanol, ethanol, propanol, butanol, methoxypropanol, and benzyl alcohol; polyhydric alcohol-based solvents, such as ethylene glycol, diethylene glycol, triethylene glycol, glycerol, propylene glycol, dipropylene glycol, and methylpropanediol; ether-based solvents, such as dimethyl ether, diethyl ether, dipropyl ether, dibutyl ether, tetrahydrofuran, diethylene glycol, diethylene glycol dimethyl ether, and triethylene glycol; ester-based solvents, such as butyl acetate, ethyl acetate, isobutyl acetate, propylene glycol methyl acetate, ethyl cellosolve, butyl cellosolve, 2-methylcellosolve acetate, ethyl cellosolve acetate, butyl cellosolve acetate, y-butyrolactone, γ-valerolactone, δ-valerolactone, γ-caprolactone, ε-caprolactone, and α-methyl-γ-butyrolactone; ketone-based solvents, such as acetone, methyl ethyl ketone, methyl isobutyl ketone, diisobutyl ketone, cyclopentanone, cyclohexanone, and acetophenone; carbonate-based solvents, such as diethyl carbonate and propylene carbonate; hydrocarbon-based solvents, such as hexane, heptane, octane, benzene, toluene, and xylene; phenol-based solvents, such as phenol, m-cresol, p-cresol, 3-chlorophenol, and 4-chlorophenol; 1,3-dimethyl-2-imidazolidinone; dimethyl sulfoxide; sulfolane; dimethyl stapen; mineral spirits; and petroleum naphtha-based solvents.

In the electrodeposition paint of the present invention, the organic solvent content may be any concentration as long as the water-insoluble inorganic compound content is set in the predetermined range, and a coating is formed by electrodeposition. The organic solvent content is preferably 1 to 70% by mass, and more preferably 10 to 60% by mass in the electrodeposition paint. When the organic solvent content is 10% by mass or more, the stability of the heat-resistant resin precursor can be improved, whereas when the content is 60% by mass or less, a reduction in current efficiency during electrodeposition coating can be prevented. The lower limit of the organic solvent content is more preferably 20% by mass or more, while the upper limit is more preferably 50% by mass or less.

### (Water)

The water is not limited as long as it can be used in the electrodeposition of an electrodeposition paint, and may be any type of water, such as tap water, industrial water, pure water, or ion exchange water. These types of water may be used alone or as a mixture of two or more.

In the electrodeposition paint of the present invention, the water content may be any concentration as long as the water-insoluble inorganic compound content is set in the predetermined range, and a coating is formed by electrodeposition. The water content is preferably 20 to 80% by mass, and more preferably 40 to 60% by mass in the electrodeposition paint.

### (Other Components)

The electrodeposition paint of the present invention may further optionally contain other components, as long as it contains a heat-resistant resin precursor, a water-insoluble inorganic compound, a basic compound, an organic solvent, and water, and can achieve both high insulating properties and high heat resistance.

Examples of the other components include tackifiers, such as alkylphenol resin, alkylphenol-acetylene resin, xylene resin, coumarone-indene resin, terpene resin, and rosin; bromine-based flame retardants, such as polybromodiphenyl oxide and tetrabromobisphenol A; chlorine-based flame retardants, such as chlorinated paraffins and perchlorocyclodecane; phosphate-based flame retardants, such as phosphates and halogen-containing phosphates; boron-based flame retardants; oxide-based flame retardants, such as antimony trioxide; phenol-based, phosphorus-based, and sulfur-based antioxidants; common plastic compounding components, such as thermal stabilizers, photo stabilizers, UV absorbents, lubricants, pigments, cross-linking agents, cross-linking aids, silane coupling agents, and titanate coupling agents; and aromatic polyamide fibers.

The electrodeposition paint of the present invention may contain, for example, 0.1 to 10 parts by mass of these other components, relative to 100 parts by mass of the heat-resistant resin precursor.

### (Method for producing the electrodeposition paint)

The electrodeposition paint of the present invention can be produced by mixing the above-described heat-resistant resin precursor, water-insoluble inorganic compound, basic compound, organic solvent, and water, as well as other components that may be optionally added, using a known method. Heating may be optionally performed during mixing.

The mixing may be performed using generally known mixing means, such as, for example, a kneader, a pressurizing kneader, a mixing roll, a Banbury mixer, a twinscrew extruder, a planetary centrifugal mixer, and a homogenizing mixer.

The water-insoluble inorganic compound may be ground prior to being mixed with the heat-resistant resin precursor and the like. The grinding reduces the particle diameter of the water-insoluble inorganic compound, and achieves a uniform particle diameter. Thus, during mixing, the water-insoluble inorganic compound can be dispersed well, and the partial discharge resistance of the insulating coating to be formed by electrodeposition and subsequent curing can be further improved.

The grinding may be performed using generally known grinding means, such as, for example, a ball mill, a rod mill, a mass-colloider, a dry jet mill, a homogenizer, and a wet jet mill.

The water-insoluble inorganic compound may be mixed with the heat-resistant resin precursor and the like by, for example, directly dispersing and mixing the water-insoluble inorganic compound into the heat-resistant resin precursor. It is preferred to disperse and mix the sol-state water-insoluble inorganic compound dispersed in a dispersion medium such as water or an organic solvent into the heat-resistant resin precursor.

### 2. Insulating coating

The insulating coating of the present invention is a coating formed by electrodeposition and curing of the electrodeposition paint of the present invention. Specifically, the insulating coating of the present invention is a coating formed as follows: When the electrodeposition paint of the present invention is electrodeposited onto an electrodeposition workpiece (such as a conductor or the like that can be electrodeposited), a coating film containing the heat-resistant resin precursor and the water-insoluble inorganic compound is formed, and then the coating film is cured by a curing means, such as heating, to form the coating. In the coating film, the water-insoluble inorganic compound content is 1 to 30% by mass relative to a total of 100% by mass of the heat-resistant resin precursor and the water-insoluble inorganic compound. Furthermore, the insulating coating of the present invention contains the heat-resistant resin formed by curing the heat-resistant resin precursor and the water-insoluble inorganic compound, and the water-insoluble inorganic compound content is 1 to 30% by mass relative to a total of 100% by mass of the heat-resistant resin and the water-insoluble inorganic compound.

The thickness of the insulating coating of the present invention may be any thickness that can impart high insulating properties and high heat resistance to the electrodeposition workpiece. The thickness is, for example, 5 to 100 µm, and is preferably 30 to 70 µm.

The electrodeposition may be performed using a known electrodeposition coating method. The electrodeposition coating method may be performed batchwise or continuously. In the case of the batchwise method, electrodeposition is performed while a metal part is immersed and left standing in an electrodeposition paint tank. In the case of the continuous method, electrodeposition is performed while the electrodeposition workpiece is continuously passed through the electrodeposition paint.

Application of a voltage to the electrodeposition paint may be performed using a constant current method or a constant voltage method. The applied voltage is, for example, 1 to 100 V.

The method of curing the electrodeposition paint is preferably heating. Specifically, after the electrodeposition coating, the electrodeposition paint is subjected to a baking treatment to form an insulating coating formed of the cured product of the electrodeposition paint. The oven temperature in a baking oven is, for example, 200 to 500°C. The baking treatment time is, for example, 10 to 100 minutes. The baking treatment may be performed either in a single step at a single baking treatment temperature, or in a plurality of steps at mutually different baking treatment temperatures.

The insulating coating formed of the cured product of the electrodeposition paint of the present invention has high heat resistance and high insulating properties. Thus, the insulating coating of the present invention can be suitably used as an insulating material for which high heat resistance is required.

### 3. Heat-resistant insulating part and heat-resistant article

The electrodeposition paint and the insulating coating of the present invention are used for a heat-resistant insulating part. The heat-resistant part generally includes a conductor and an insulating coating formed of a cured product of the electrodeposition paint of the present invention formed on a surface of the conductor. Likewise, the electrodeposition paint and the insulating coating of the present invention are used for a heat-resistant article. The heat-resistant article includes a conductor and an insulating coating formed of a cured product of the electrodeposition paint of the present invention formed on a surface of the conductor. Because the above-described heat-resistant insulating part and heat-resistant article include the insulating coating formed of the cured product of the electrodeposition paint of the present invention, high insulating properties and high heat resistance are imparted to the conductor.

The conductor is an electrically conductive part, and is preferably a metal part. The metal constituting the metal part is not limited as long as it can be electrodeposited, and examples include copper, nickel, iron, steel, aluminum, silver, and an alloy containing at least one of these metals. The surface of the conductor may be surface-treated as long as it can be electrodeposited. The shape of the conductor is not limited as long as it can be electrodeposited, and examples include a plate shape and a molded article. The electrodeposition method is as described above.

The electrodeposition paint of the present invention can satisfactorily form an insulating coating in, for example, a high-output electrical apparatus (such as a motor) that generates much heat. Specifically, the electrodeposition paint of the present invention may be electrodeposition-coated onto a conductor and cured to obtain a heat-resistant electric wire whose conductor surface is covered with the insulating coating, and the heat-resistant electric wire may be applied to a high-output electrical apparatus. Alternatively, the electrodeposition paint of the present invention may be electrodeposition-coated onto the conductor region of a high-output electrical apparatus and cured.

Examples of insulating articles including the insulating coating of the present invention include a heat-resistant electric wire and a heat-resistant rotating electric machine.

For example, in the case of a heat-resistant electric wire, the electrodeposition paint of the present invention may be used to form an insulating coating on the surface of the conductor of the electric wire, such that the insulating coating forms an insulator to impart high heat resistance and high insulating properties. The insulating coating provides the heat-resistant electric wire with improved operating safety during use at high temperatures.

The heat-resistant electric wire is an electric wire including a conductor and an insulating coating that includes a single layer or a plurality of layers formed on a perimeter of the conductor, wherein at least one layer of the insulating coating is formed of the insulating coating of the present invention.

Examples of materials of the conductor include the metals mentioned above.

The heat-resistant electric wire can be produced by, for example, electrodeposition-coating the electrodeposition paint of the present invention onto the surface of a conductor, and curing the electrodeposition paint by baking, for example, to form an insulating coating.

The heat-resistant rotating electric machine is, for example, a rotating electric machine including the above-described heat-resistant electric wire. The heat-resistant rotating electric machine may be produced by forming a rotating electric machine using a conductor, and then forming an insulating coating on the surface of the conductor to form the heat-resistant electric wire.

Examples of the heat-resistant rotating electric machine include motors and generators.

### Examples

The present invention will be hereinafter described more specifically with examples, although the present invention is in no way limited to these examples.

### <Example 1 >

### (1-1. Preparation of a boehmite pre-gel)

10.0 g of an ethanol dispersion of plate-like boehmite (10.0% by mass, average particle diameter: 20 nm, aspect ratio: 2) as a water-insoluble inorganic compound and 10.0 g of N-methyl-2-pyrrolidone (NMP) were taken into a plastic sealed vessel, and stirred using a planetary centrifugal mixer ("ARE-310" available from THINKY CORPORATION) for 3 minutes in the mixing mode (2000 rpm) to obtain a pre-gel in which the proportion of the boehmite to the whole pre-gel was 5.0% by mass.

### (1-2. Preparation of a polyimide resin precursor (polyamic acid) varnish)

In a 1-L four-neck flask equipped with a stirrer and a thermometer, 40 g of 4,4'-diaminodiphenylether and 410.4 g of NMP were placed, and dissolved by heating to 50°C with stirring. Subsequently, 22 g of pyromellitic anhydride and 28 g of biphenyltetracarboxylic dianhydride were gradually added to the solution. After the completion of the addition, the mixture was stirred for 1 hour to obtain a polyamic acid varnish in which an aromatic polyamic acid represented by formula (I) below was dissolved in NMP at a concentration of 18.0% by mass. 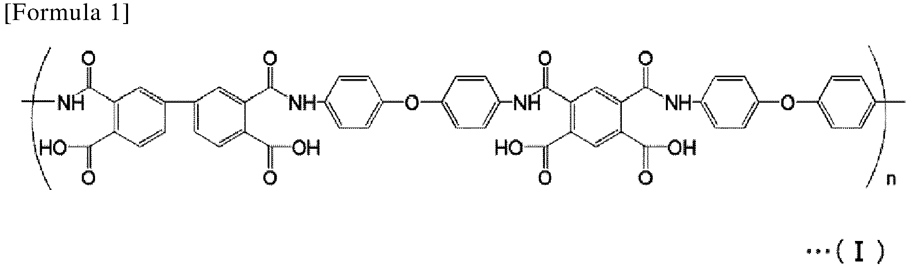 wherein n is an integer of 2 or more.

### (1-3. Preparation of an electrodeposition paint)

7.6 g of the boehmite pre-gel (boehmite: 5.0 % by mass) prepared in 1-1 above and 40.0 g of the polyamic acid varnish (aromatic polyamide acid: 7.2 g, NMP: 32.8 g) prepared in 1-2 above were taken into a plastic sealed vessel, and stirred using a planetary centrifugal mixer ("ARE-310" available from THINKY CORPORATION) for 5 minutes in the mixing mode (2000 rpm), and for 5 minutes in the defoaming mode (2200 rpm) to obtain an insulating varnish. In a 1-L four-neck flask equipped with a stirrer and a thermometer, 47.6 g of the insulating varnish, 8 g of benzyl alcohol, and 0.4 g of N-methylmorpholine as a basic compound were placed, and 50 g of pure water was added dropwise with stirring to obtain an electrodeposition paint. The proportion of nonvolatile components (the polyamic acid and the boehmite) in the electrodeposition paint was 7.2% by mass, and the boehmite content was 5.0% by mass relative to the nonvolatile components (a total of 100% by mass of the polyamic acid and the boehmite).

### (1-4. Electrodeposition coating)

The formation of a coating using the electrodeposition paint was performed using a stainless steel container as a cathode, and a nickel-plated copper sheet to be coated with the electrodeposition coating as an anode. The electrodeposition paint prepared in 1-3 above was placed in the stainless steel container, and electrodeposition was performed with stirring for a current-application time of 900 seconds at a voltage of 5 V. The copper sheet was then slowly withdrawn from the electrodeposition paint. The copper sheet was hung in a forced air oven and dried sequentially under temperature conditions of 100°C for 20 minutes, 200°C for 20 minutes, and 300°C for 20 minutes to obtain a copper sheet coated with an insulating coating (on which an insulating coating was formed). In the insulating coating, the proportion of the boehmite was 5% by mass relative to the nonvolatile components (a total of 100% by mass of the polyamic acid and the boehmite), and the insulating coating had a thickness of 40 µm.

### <Example 2>

### (2-1. Preparation of an electrodeposition paint)

An electrodeposition paint was obtained as in 1-3, except that the boehmite pre-gel (boehmite: 5.0% by mass) prepared in 1-1 of Example 1 was used in an amount of 16 g. The proportion of nonvolatile components (the polyamic acid and the boehmite) in the electrodeposition paint was 7.0% by mass, and the boehmite content was 10% by mass relative to the nonvolatile components (a total of 100% by mass of the polyamic acid and the boehmite).

### (2-2. Electrodeposition coating)

Electrodeposition coating was performed as in 1-4 of Example 1, except that the electrodeposition paint prepared in 2-1 was used, and the current-application time was set to 600 seconds. In the insulating coating, the proportion of the boehmite was 10% by mass relative to the nonvolatile components (a total of 100% by mass of the polyamic acid and the boehmite), and the insulating coating had a thickness of 30 µm.

### <Example 3>

### (3-1. Preparation of an electrodeposition paint)

An electrodeposition paint was obtained as in 1-3, except that the boehmite pre-gel (boehmite: 5.0% by mass) prepared in 1-1 of Example 1 was used in an amount of 36 g. The proportion of nonvolatile components (the polyamic acid and the boehmite) in the electrodeposition paint was 6.7% by mass, and the boehmite content was 20% by mass relative to the nonvolatile components (a total of 100% by mass of the polyamic acid and the boehmite).

### (3-2. Electrodeposition coating)

Electrodeposition coating was performed as in 1-4 of Example 1, except that the electrodeposition paint prepared in 3-1 was used, and the voltage was set to 10 V, and the current-application time to 300 seconds. In the insulating coating, the proportion of the boehmite was 20% by mass relative to the nonvolatile components, and the insulating coating had a thickness of 34 µm.

### <Comparative Example 1>

### (4-1. Preparation of an electrodeposition paint)

An electrodeposition paint was obtained as in 1-3, except that the boehmite pre-gel (boehmite: 5.0% by mass) prepared in 1-1 of Example 1 was not mixed. The proportion of a nonvolatile component (the polyamic acid) in the electrodeposition paint was 7.3% by mass.

### (4-2. Electrodeposition coating)

Electrodeposition coating was performed as in 1-4 of Example 1, except that the electrodeposition paint prepared in 4-1 was used. The resulting coating had a thickness of 40 µm.

### <Comparative Example 2>

### (5-1. Preparation of an electrodeposition paint)

An electrodeposition paint was obtained as in 1-3, except that the boehmite pre-gel (boehmite: 5.0% by mass) prepared in 1-1 of Example 1 was used in an amount of 0.7 g. The proportion of nonvolatile components (the polyamic acid and the boehmite) in the electrodeposition paint was 7.3% by mass, and the boehmite content was 0.5% by mass relative to the nonvolatile components (a total of 100% by mass of the polyamic acid and the boehmite).

### (5-2. Electrodeposition coating)

Electrodeposition coating was performed as in 1-4 of Example 1, except that the electrodeposition paint prepared in 5-1 was used. The resulting coating had a thickness of 40 µm.

### <Comparative Example 3>

### (6-1. Preparation of an electrodeposition paint)

An electrodeposition paint was prepared as in 1-3, except that N-methylmorpholine as a basic compound was not added. However, the resin component completely agglomerated and precipitated during the addition of water, and an electrodeposition paint was not obtained.

### <Comparative Example 4>

### (7-1. Preparation of an electrodeposition paint)

In a 300-mL four-neck flask equipped with a stirrer and a thermometer, 200 g of a polyimide electrodeposition paint ("Q-ED-X0809" available from PI R&D Co., Ltd, polyimide resin: 7 to 9% by mass, N-methyl-2-pyrrolidone: 51 to 54% by mass, 1-methoxy-2-propanol: 12 to 15% by mass, water: 23 to 27% by mass, piperidine as a basic compound: 0.3% by mass) was placed, and, with stirring, 17.8 g of the boehmite pre-gel (0.5% by mass) prepared in 1-1 above was injected into the flask with a microsyringe over 10 minutes to give an electrodeposition paint containing the boehmite. In the electrodeposition paint, the proportion of the boehmite was 5.0% by mass relative to total nonvolatile components (a total of 100% by mass of the polyimide resin and the boehmite).

### (7-2. Electrodeposition coating)

Electrodeposition coating was performed as in 1-4 of Example 1, except that the electrodeposition paint prepared in 7-1 was used, and the voltage was set to 30 V, and the current-application time to 60 seconds. Agglomerates formed in the electrodeposition paint, and the resulting coating had low film smoothness and uniformity. A coating having insulating properties was not obtained.

### <Evaluation of heat resistance>

The heat resistance of each of the films obtained by the electrodeposition was evaluated. The heat resistance was evaluated based on the mass loss starting temperature as defined in JIS K 7120, by performing thermal mass analysis in air, using TG/DTA6200 (simultaneous thermogravimetry-differential thermal analyzer available from SII). The evaluation results are shown in Table 1.

**[Table 1]**

| | Example 1 | Example 2 Example 3 | | Comparative Example 1 | Comparative Example 2 | Comparative Example 3 | Comparative Example 4 |
|---|---|---|---|---|---|---|---|
| Resin precursor | Polyamic acid | Polyamic acid | Polyamic acid | Polyamic acid | Polyamic acid | Polyamic acid | Polyimide*¹ |
| Water-insoluble inorganic compound content | 5 % by mass | 10 % by mass | 20 % by mass | 0 % by mass | 0.5 % by mass | 5 % by mass | 5 % by mass |
| Basic compound | N-methylmorpholin | N-methylmorpholin | N-methylmorpholin | N-methylmorpholin | N-methylmorpholin | | Piperidine |
| Heat resistance (mass loss starting temperature) | 597°C | 596°C | 583°C | 561°C | 576°C | Paint unobtainable | Coating unobtainable |

*1: In Comparative Example 4, a polyimide resin was used instead of a resin precursor.

The results shown in Table 1 revealed that the heat resistance of the films prepared using the electrodeposition paints containing a water-insoluble inorganic compound was improved over the films prepared using the paints not containing a water-insoluble inorganic compound.

### <Evaluation of the insulating properties (partial discharge resistance)>

### (Partial discharge resistance test for the coatings obtained using the electrodeposition paints)

The coatings by electrodeposition coating prepared in Examples 1 to 3 and Comparative Example 1 were evaluated using the following testing method. Specifically, the testing method was as follows: As shown in Fig. 1, sequentially from below, a nickel-plated copper sheet 4 coated with a coating 3 by electrodeposition was mounted on a stainless steel support 5. A metal ball (2 mm in diameter) 2 and a copper tube 1 were sequentially placed thereon and pressed under their own weight, and the copper tube 1 was immovably fixed. The copper tube 1 and the nickel-plated copper sheet 4 were connected to a power supply, such that the metal ball 2 served as a high-voltage electrode and the nickel-plated copper sheet 4 as a low-voltage electrode. In this manner, partial discharge was induced across the metal ball and the coating, and the time to dielectric breakdown of the coating was measured. An inverter pulse generator available from Nissin Pulse Electronics Co., Ltd. was used as the measuring apparatus. The measurement was performed at a voltage of 2.0 kV, which is not less than the partial discharge starting voltage, and a frequency of 10 kHz. The results are shown in Table 2.

**[Table 2]**

| | Coating film thickness (µm) | Dielectric breakdown time (h) |
|---|---|---|
| Example 1 | 40 | 2.2 |
| Example 2 | 30 | 7.3 |
| Example 3 | 34 | 49 |
| Comparative Example 1 | 40 | 0.4 |

The results of the examples show that the electrodeposition paints of the present invention can impart high heat resistance and insulating properties to articles for which high heat resistance is required, such as an electric wire, a motor, and a generator, by forming coatings when electrodeposited and cured. The results also show that the electrodeposition paints of the present invention can form insulating coatings having excellent partial discharge resistance.

### Reference Signs List

1: Copper tube
2: Metal ball (2 mm in diameter)
3: Coating
4: Nickel-plated copper sheet
5: Stainless steel support

## Claims

1. An electrodeposition paint comprising a heat-resistant resin precursor, a water-insoluble inorganic compound, a basic compound, an organic solvent, and water, wherein
the water-insoluble inorganic compound content is 1 to 30% by mass relative to a total of 100% by mass of the heat-resistant resin precursor and the water-insoluble inorganic compound.

2. The electrodeposition paint according to claim 1, wherein the heat-resistant resin precursor is at least one of a polyimide resin precursor and a polyamide-imide resin precursor.

3. The electrodeposition paint according to claim 1 or 2, wherein the water-insoluble inorganic compound is at least one selected from the group consisting of a silica compound, a silica-alumina compound, an aluminum compound, a nitride, and a layered silicate mineral.

4. The electrodeposition paint according to claim 3, wherein the aluminum compound is at least one selected from the group consisting of alumina, an aluminum hydroxide, and a hydrated alumina.

5. An insulating coating obtained by electrodeposition and curing of the electrodeposition paint according to any one of claims 1 to 4.

6. Use of a composition as an electrodeposition paint, the composition comprising a heat-resistant resin precursor, a water-insoluble inorganic compound, a basic compound, an organic solvent, and water, wherein
the water-insoluble inorganic compound content is 1 to 30% by mass relative to a total of 100% by mass of the heat-resistant resin precursor and the water-insoluble inorganic compound.
